Europäisches Patentamt

**European Patent Office**

**Office européen des brevets**

(11) Publication number: **0 134 333**
**A1**

(12) **EUROPEAN PATENT APPLICATION**

(21) Application number: **83304718.6**

(22) Date of filing: **15.08.83**

(51) Int. Cl.⁴: **B 01 J 29/06**

(43) Date of publication of application:
20.03.85 Bulletin 85/12

(84) Designated Contracting States:
BE DE FR GB IT NL SE

(71) Applicant: MOBIL OIL CORPORATION
150 East 42nd Street
New York New York 10017(US)

(72) Inventor: Chang, Clarence Dayton
11 Murray Place
Princeton New Jersey 08540(US)

(72) Inventor: Miale, Joseph Nicolas
25 Merritt Drive
Lawrenceville New Jersey 08648(US)

(72) Inventor: Lago, Rudolph Michael
633 Kings Road
Yardley Pennsylvania 19067(US)

(72) Inventor: Shihabi, David Said
8 Moores Mill Mr. Rose Road
Pennington New Jersey 08534(US)

(72) Inventor: Dessau, Ralph Moritz
14 Celler Road
Edison New Jersey 08817(US)

(72) Inventor: Chu, Pochen
1173 Ollerton Road
West Deptford New Jersey 08066(US)

(72) Inventor: Garwood, William Everett
125 Warwick Road
Haddonfield New Jersey 08033(US)

(72) Inventor: Kuehl, Guenter Hinrich
1956 Cardinal Lake Drive
Cherry Hill New Jersey 08003(US)

(72) Inventor: Rosinski, Edward Joseph
Box A
Pedricktown New Jersey 08067(US)

(74) Representative: Grundy, Derek George Ritchie et al,
CARPMAELS & RANSFORD 43, Bloomsbury Square
London WC1A 2RA(GB)

(54) **Treatment of zeolites.**

(57) The activity of a catalyst comprising a 1-12 constraint index zeolite composited with specified binders is increased by steaming or hydrothermal treatment carried out on the already-shaped composite.

EP 0 134 333 A1

Croydon Printing Company Ltd.

TREATMENT OF ZEOLITES

This invention relates to the treatment of zeolites to increase their catalytic activity.

Zeolite catalysts have become widely used in the processing of petroleum and in the production of various petrochemicals. Reactions such as cracking, hydrocracking, alkylation, dealkylation, transalkylation, isomerization, polymerization, addition, disproportionation and other acid catalyzed reactions may be performed with the aid of these catalysts. Both natural and synthetic zeolites are known to be active for reactions of these kinds.

Recently, synthetic zeolites containing high proportions of silica relative to alumina have been developed and zeolites of this kind have shown themselves to be useful. US-A-3,702,886 discloses a class of crystalline aluminosilicates designated ZSM-5 which have highly advantageous properties. US-A-3,941,871 discloses crystalline organosilicates which exhibit a structure, as evidenced by X-ray diffraction pattern, similar to that of ZSM-5, but with high ratios of silica relative to alumina. Materials of this kind are stated to exhibit low aging rates and to have low coke making properties when used in hydrocarbon processing.

Various treatments have been proposed in the past for modifying the activity of the zeolites, either by reducing it when too active or by increasing it when insufficient. One such treatment has been steaming and in the past it has generally been used to decrease the activity of the zeolite, as reported in "Fluid Catalytic Cracking with Zeolite Catalysts", Venuto and Habib, Marcel Dekker Inc., N.Y., N.Y. 1979.

The reduction of activity is not, however, necessarily undesirable because it may in certain circumstances be accompanied by an improvement in other characteristics of the zeolite, for example, resistance to aging. This fact has been exploited in certain processes, for example, in the alkylation process described in US-A-4,016,218., which employs a zeolite catalyst which has been subjected to a prior thermal treatment either in an inert atmosphere or by steaming, to reduce its activity. The deactivation caused by the steam becomes more pronounced at higher temperatures and with longer reaction times.

It has also been found that steaming may in certain instances have beneficial effects upon the catalyst. US-A-3,257,310, for example, describes a method for preparing a cracking catalyst of high activity and selectivity by steaming a zeolite for at least two hours at a specified temperature. The zeolites described in this patent include natural zeolites such as mordenite and faujasite and synthetic zeolites such as X, Y and L.

US-A-4,149,960 and 4,150,062 describe the use of water in the feedstock during operation to reduce coking and aging rates. US-A-3,546,100 describes a method for maintaining the selectivity of a hydrocracking catalyst by restricting the partial pressure of water during the hydrocracking operation. US-A-3,493,519 describes a method of producing hydrothermally stable cracking catalysts by calcining zeolite-Y in the presence of steam, a process which was theorized to cause lattice aluminum defects which, after subsequent treatment by base exchange with ammonium salts, chelation and calcination in air produced the desired highly active product. US-A-3,494,490 describes a method for restoring the activity to used catalyst by controlled treatment with anionic reagents including water at high temperatures, even with catalysts which had initially been steamed to reduce their level of cracking activity, such as zeolites X and Y. US-A-3,758,403 describes a method for cracking hydrocarbon feedstocks using a mixture of zeolites including a ZSM-5 type zeolite and a large pore zeolite such as zeolites X, Y or L or faujasite. The selectivity of the catalyst is said to be improved by treatment with steam which if desired, may be carried out in the cracking unit itself.

According to the present invention a method of preparing a catalyst of enhanced activity, alpha, comprises forming, in the presence of water, an intimate composite of a zeolite having a constraint index of 1 to 12 and a lattice silicon/nonsilicon atomic ratio of at

least 20 with a binder comprising an oxide of aluminum, gallium, boron, iron and/or chromium, the binder constituting from 10 to 90 weight percent of the composite on a dry basis, and contacting the composite, in the form of extrudate or shaped particles of catalyst, with water at a temperature of 100 to 500°C for a period of time sufficient to enhance catalytic activity of the composite.

Activation is usually accomplished by contacting composite for at least 1 hour, e.g., for a period of 1 to 48 hours. The contacting may be vapour-phase (steaming) or liquid-phase (hydrothermal). Steaming is preferably carried out at 200 to 500°C, more preferably 300 to 450°C notably 400 to 425°C. Hydrothermal treatment is preferably at 100 to 370°C, more preferably 150 to 200°C.

Aluminosilicate zeolites wich may be used in the present process usually have a silica to alumina ratio of at least 70 and preferably higher. It has been found that the degree of enhancement in the activity of the zeolite becomes greater as the silica to alumina ratio of the zeolite increases. Accordingly, the higher silica to alumina ratios are preferred and generally ratios of about 500:1. Marked enhancement of activity is obtained at ratios over 1600:1, for example, 26000:1. The silica to alumina ratio may be determined by conventional analysis. The ratio represents, as closely as possible, the ratio in the rigid anionic framework of the zeolite crystal i.e. the structural or framework silica:alumina ratio and excludes materials such as aluminum in binder or in another form within the channels of the zeolite. The ratio may be determined by conventional methods such as ammonia desorption/TGA.

Structural or framework aluminum may be replaced at least in part with other elements such as boron, chromium and/or iron. Highly siliceous zeolites useful in the present invention can thus include borosilicates, ferrosilicates or chromosilicates.

Zeolites which may advantageously be treated by the present activation process include ZSM-5, ZSM-11, ZSM-12, ZSM-23, ZSM-35 and ZSM-38 defined respectively by the X-ray data set forth in US-A-3,702,886, 3,709,979, 3,832,449, 4,076,842, 4,016,245 and 4,046,859.

Highly siliceous forms of ZSM-5 are described in US-A-3,941,871 Re. 29,948, highly siliceous forms of ZSM-22 in U.S. Patent Applications Serial Nos. 003,143 and 003,145 and highly siliceous forms of ZSM-12 in U.S.

Patent Applications Serial Nos. 003-144 and 003,146.

Natural zeolites may be hydrothermally treated by various activation procedures. Natural minerals which may be so treated include ferrerite, brewsterite, stilbite, dachiardite, epistilbite, heulandite, and clinoptilolite; however, other treatments may be required such as base exchange, steaming, alumina extraction and calcination.

When it has been synthesized in the alkali metal form, the zeolite may be converted to the hydrogen form, generally by intermediate formation of the ammonium form by ammonium ion exchange and calcination of ammonium form to yield the hydrogen form. In addition to the hydrogen form, other forms of the zeolite wherein the original alkali metal has been reduced to less than about 1.5 percent by weight may be used. Thus the original alkali metal of the zeolite or introduced hydrogen cations may be replaced by ion exchange with other suitable ions of Groups IB to VIII of the Periodic Table, including, by way of example, nickel, cadmium, copper, zinc, palladium, calcium or rare earth metals. According to the invention, it is normally preferred to use zeolites of large crystal size, that is, of about 0.1 microns or larger as opposed to small crystal zeolites of about 0.02 to 0.05 micron crystal size.

The zeolite may be composited with an activating metal oxide which is capable of activating the zeolite by the creation of additional active sites when the zeolite/oxide composite is treated with water and functions as a binder for the zeolite. The preferred binder is hydrated alumina, preferably in the form of alpha alumina monohydrate or beta-alumina trihydrate; other favoured binders are silica-alumina, silica-alumina-thoria, silica-alumina-zirconia, silica-alumina-magnesia and chromia. Simple experiment may be employed to determine other useful materials or combinations.

In composite catalysts, the relative proportions of zeolite and activating binder may be adjusted in accordance with the silica to alumina ratio of the zeolite, with the zeolites of higher silica:alumina ratio being able to benefit more from a larger proportion of binder than those with a lower ratio. The amount of binder is preferably 20 to 80 percent by weight. A zeolite with a silica to alumina ratio of about 1600:1 is advantageously composited with 25 to 50 percent by weight of alumina binder, based on total solids weight.

The zeolite can be composited with the binder by intimately mixing by grinding or mulling the materials together, in the presence of water, after which the mixture is formed into suitable particles and dried. It has been found that greater enhancement of activity occurs if the zeolite and binders are intimately mixed together. The mixture of zeolite, binder and water may conveniently be formed into particles by extrusion using an extrusion press or, alternatively, other shaping methods may be used such as pelletizing or pressing. The amount of water is chosen as to give a mixture which has a satisfactory consistency for the forming step. The zeolite may contain sufficient occluded water or sufficient water may be present in the binder.

The zeolite may be treated to convert it to the desired form either before or after it is composited with the binder. Thus, if it is synthesized in the alkali metal form it may be converted to the hydrogen or another cationic form e.g. the alkali metal, alkaline earth metal or ammonium form before or after compositing with the binder. If conversion entails more than one step the requisite steps may, if desired, be carried out at different stages of the process, some before compositing and some after. Generally, however, the zeolite should be at least partly in the hydrogen form during the contacting with water or, alternatively, in a form which will be wholly or partly converted to the hydrogen form under the conditions employed during treatment. The ammonium form or the alkylammonium forms are readily converted at elevated temperatures. Nevertheless, as is shown in the Examples which follow, activation does occur when the zeolite is employed in the alkali metal form.

After the zeolite/binder composite has been formed it is contacted with water at 100 to 500°C. During this step, the composite can be held in an atmosphere entirely or partly of steam at an elevated temperature. Generally it is preferred to operate with an atmosphere of 100% water vapor although partial atmospheres may also be used with some loss of effectiveness. If a gas other than steam is present it should be an inert gas such as nitrogen. The pressure will normally be atmospheric or greater, e.g. 100 to 500 kPa, preferably 100 to 200 kPa. Alternatively the composite can be held in liquid water. The treatment should generally be continued for at least one hour and usually durations of several hours are required. A period of 12 to 48 hours under hydrothermal conditions is preferred, regardless of phase.

Hydrothermal activation according to the invention may be conducted under various treatment conditions. The elevated temperature of the liquid aqueous media is selected to provide adequate reaction rate. Although some activation is observed at moderately elevated temperatures of 80°C to 100°C, the activation rate is quite slow. Generally, the treatment proceeds well at temperatures in the range of about 140°C to 370°C preferably about 150°C to 200°C, using an enclosed pressure vessel to maintain at least the autogenous pressure up to about 17 atmospheres (1700 kPa).

Above the normal boiling point of the liquid, superatmospheric pressure is applied to maintain the aqueous media in the liquid phase. Where essentially pure water is employed, the autogenous pressure may vary from 1 atmosphere (101 kPa) at 100°C to over 218 atmospheres at the critical temperature of water at 374°C (736°F). Above this temperature, pure water cannot be maintained in liquid phase.

While the reaction mechanism is not completely understood, it is believed that alumina or other activating agents are partially ionized at the liquid interface and are transported to the high-silica zeolite through the aqueous liquid phase during treatment at elevated

temperatures. Nuclear magnetic resonance studies confirm that the aluminum is tetrahedrally bound in the zeolite structure. This chemical structure is known to provide acidic sites for catalytic activity in prior zeolite catalysts.

Under neutral conditions or acid pH, metal oxide-containing agents tend to form cationic species; however, amphoteric metals or other agents may be employed in the anionic form as well, especially in basic systems at pH greater than 7. The activating agent may be introduced as a borate, nitrate, silicate, phosphate, tungstate, chromate, aluminate, complex alkaline salt or other form ionizable under hydrothermal conditions.

The amount of activating agent employed in the treatment may be varied considerably within the inventive concept. Particular emphasis is placed on treatment with a solid metal oxide and this type of activation benefits from intimate contact between the solid activating agent and zeolite particles. Significant activity improvement is achieved where finely-divided solids are milled together with the aqueous liquid phase to provide a large contact area between the solid phases.

The amount of water maintained in the liquid phase in contact with the zeolite should be sufficient to completely wet the reactants and/or to fill interstitial voids in the composited solids. Wet milled composites provide both intimate solid to solid contact and thorough dispersion in the aqueous liquid phase.

Steam activation according to the invention may employ steam produced in-situ, for example, by the dehydration of alcohols such as methanol, ethanol, propanol, n-butanol or pentanol to produce the steam, with olefins as a by-product or by the combustion of hydrocarbons to produce carbon oxides and steam. The steaming may be carried out under conditions such as those described in European Published Application No. 34,444.

The extent of the activation produced by the steaming is notable. Increases of over 100 percent in the alpha value may be obtained with zeolites having a silica to alumina ratio of 1200:1 or more. Commensurate results 0134333 may be obtained with other zeolites of differing silica to alumina ratio. The enhancement in activity is believed to be caused by the creation of additional, stable active internal sites in the zeolite because after the steaming treatment is complete, the Constraint Index remains consistent with that cf the original zeolite structure although the alpha value has increased significantly. The catalyst therefore retains its original selectivity but with an improved acid activity.

The zeolite/binder composites produced according to the invention may be used as catalysts in acid catalyzed conversion reactions of the kind catalyzed by the type of zeolite used in the method. Hydrocarbon conversion reactions such as cracking, hydrocracking, alkylation, dealkylation, transalkylation, isomerization, polymerization, disproportionation and aromatization are particularly important but other reactions such as the conversion of oxygenates such as methanol or dimethyl ether to hydrocarbons are also of interest. The conditions employed in these reactions will be those appropriate to the particular catalyst being used, having due regard to its enhanced activity. The method is of particular utility for restoring activity to catalysts which have become inactivated by exposure to water during use. For example, in processes such as the conversion of methanol to hydrocarbons, substantial quantities of water in the form of steam are produced and they may tend to deactivate the catalyst. If this happens, the present process may be used to reactivate it.

A particularly favoured procedure for implementing the invention involves the following steps: (1) mulling of a high silica zeolite with an inorganic oxide, such as alumina, and water, (2) forming or shaping, (3) calcination in a non-oxidizing atmosphere, (4) treatment with hydrogen ions or ions capable of conversion thereto such as ammonium ions in order to reduce the sodium content, and (5) air calcination at elevated temperatures.

The first step is mulling the zeolite with an

- 9 -                                    0134333

appropriate acidic inorganic oxide in the presence of water. It is absolutely crucial that there be water present during step 1 since it has been found that if the zeolite and the inorganic oxide material is mulled in a dry state then substantially no activation will occur. The amount of water which is utilized is not narrowly critical and only enought water has to be used to ensure an adequate mixture of the inorganic binder and the zeolite. The mulling can be carried out by hand with a mortar and pestle or commercially available mullers can be used. An example of such mullers are those manufactured by the Cincinnati Muller Company of Cincinnati, Ohio. The acidic inorganic binder which is used in step 1 is preferably alumina or an alumina-containing material.

The second step involves a forming step so as to obtain discrete particles of the catalyst composition. The forming step includes simply sizing the material to any appropriate size using any appropriate dye or compacting type device, including hand pelleting. However, a preferred embodiment of this invention is to use extrusion, i.e. to pass the composition through a dye at extremely high pressures, i.e. at pressures ranging from about 5 to about 50 tons or even higher. Typical extruders can be of the hydraulic ram type or of the bonnet auger type.

The third step is a calcination step in a non-oxidizing atmosphere at temperatures from about 900-1200°F for about 1-5 hours. The non-oxidizing atmosphere is preferably ammonia, although nitrogen and/or inert gases can be used.

The fourth step involves ion exchange of the resulting composition with hydrogen ions or ammonium ions in order to reduce the sodium content to less than about 0.02 wt. %.

The fifth step involves calcination in air at elevated temperatures, i.e. temperatures from about 800-1500°F for periods of time ranging from about 2-5 hours. A particularly preferred embodiment would be air calcination at 1000°F for about three hours.

- 10 -

0134333

The following Examples illustrate the invention.

In the hydrothermal Examples high-silica zeolite is treated with a variety of activating agents and process conditions. Unless otherwise noted, the standard hydrothermal treating procedure employs equal parts by weight of activating agent and zeolite (1:1 ratio), a temperature of 165°C to 170°C and a one-day (24 hour) period. The standard zeolite is an acid ZSM-5 crystalline zeolite having a silica:alumina ratio of 26000:1 and hexane crack- ing activity ($\curlyvee$ -value) of 0.02, as determined by a standard catalytic activity test. The ammonium form of the catalyst is composited with the activating agent by wet milling, air dried and further dried in a muffle furnace at 130°C. The composite mixture is calcined at 540°C (1000°F) to convert the ammonium form to HZSM-5 and then hydrothermally treated according to the standardized procedure. The activated catalyst is recovered, post-treated with ammonium nitrate to base-exchange the catalyst and calcined at 540°C. This post-treatment removes cationic surface materials which are not incorporated into the zeolite structure as tetrahedrally bound atoms, leaving active acid catalyst sites which have enhanced Bronsted acidity.

The apparatus employed comprises a steel auto- clave equipped with temperature and pressure measuring devices and an internal sample support for holding open top test tubes, during treatment. A quantity of water is contained in the autoclave bottom, with test tubes being suspended in the liquid water. Each sample comprises the zeolite, activating agent and aqueous medium in predetermined amount. During the treatment the autoclave is heated to treatment temperature. The water vaporizes to form a saturated gas phase in equilibrium with the liquid phase at elevated temperatures.

Examples 1 to 7 (Hydrothermal)

ZSM-5 (65 parts by weight) is wet milled with $\alpha$-alumina monohydrate (35 parts) extruded into cylindrical pellets having a diameter of about 2 mm., dried, calcined and each sample is covered with water in an open tube.

The products are exchanged with 1N NH$_4$NO$_3$ by conventional methods and calcined prior to testing. The results are tabulated below:

| Example No. | Temp.($^\circ$C) | Time | Acid activity ($\alpha$) | Notes |
|---|---|---|---|---|
| 1 | 165 | 1 day | 41 | - |
| 2 | 100 | 8 days | 4.5 | - |
| 3 | 170 | 1 day | 33 | H$_2$O loss |
| 4 | 165 | 1 day | 195 | 1N.NaOH aq. solution |
| 5 | 165 | 1 day | 72 | 0.2N NaOH aq. solution |
| 6 | 25 | 1 day | 0.6 | 1N. NaOH aq. solution |
| 7 | 173 | 14 hrs. | 23 | - |

The Alpha test is described in J. Cat., Vol. VI, pp 278-287, 1966.

Examples 8-10 (Hydrothermal)

The above procedure is repeated except that different samples are treated simultaneously in a sealed autoclave at 130$^\circ$C for 64 hours and then at 170$^\circ$C for 24 hours. Control Example 8 contains no alumina and consists of HZSM-5 ($\alpha$ = 0.015). Example 9 is an extruded mixture of the particulate zeolite and alpha-alumina monohydrate binder in equal weight portions. Example 10 is an equal mixture of the zeolite with gamma-alumina beads slurried with water.

| Example No. | Alumina | Treatment | Activity ($\alpha$) |
|---|---|---|---|
| 8 | nil | none | 0.015 |
| 9 | binder | hydrothermal | 41 |
| 10 | beads | hydrothermal* | 7 |

*Loss of H$_2$O indicated. Beads separated from treated zeolite prior to activity test.

This comparative experimentation shows the greater enhancement which is obtained by more intimate contact between the solid materials.

Examples 11 to 15 (Hydrothermal)

The procedure of Example 10 is repeated using an admixture of HZSM-5 and $\gamma$-Al$_2$O$_3$ beads, except that the standard heating period is 1 day.

| Example No. | Temp. ($^{\circ}$C) | Activity | Note |
|---|---|---|---|
| 11 | 165 | 7 | - |
| 12 | 100 | 0.3 | - |
| 13 | 170 | 2 | H$_2$O loss |
| 14 | 165 | 0.5 | Steam only |
| 15 | 165 | 81 | -N NaOH |

Examples 11, 13 and 14 show how hydrothermal treatment in contact with an aqueous liquid can improve activity markedly (14X). By fully covering the catalyst with water during hydrothermal treatment enhancement is maximized.

Examples 16 to 29 (Hydrothermal)

A variety of activating agents are used to treat the HZSM-5 catalyst according to the standard procedure. Except as noted, equal parts by weight of zeolite and particulate activating agent are wet milled and treated in an excess of water at 165$^{\circ}$C.

| Example No. | Act. agent | Activity | ($\propto$) Note |
|---|---|---|---|
| 16 | B$_2$O$_3$ | 0.8 | 170$^{\circ}$, 0.5 p |
| 17 | NaAlO$_2$ | 148 | 0.6 parts |
| 18 | TiO$_2$ | 1.3 | 0.5 parts |
| 19 | Fe(NO$_3$)$_3$ | 0.3 | 170$^{\circ}$ |
| 20 | B$_2$O$_3$ | 0.5 | 0.7 parts |
| 21 | V$_2$O$_5$/SiO$_2$* | 1.4 | 0.6 parts |
| 22 | Na$_3$PO$_4$ | 2.9 | 0.6 parts |
| 23 | NH$_4$VO$_4$ | 0.6 | 0.5 parts |
| 24 | K$_2$CrO$_4$ | 0.9 | 0.8 parts |
| 25 | Na$_2$B$_4$O$_7$ | 1.6 | 0.7 parts |
| 26 | NaAlO$_2$ | 27 | 0.1 parts H$_2$O loss |
| 27 | NaAlO$_2$ | 223 | 0.5 parts |

| Example No. | Act. agent | Activity ($\alpha$) | Note |
|---|---|---|---|
| 28 | $Na_2WO_4$ | 1.1 | 0.7 parts |
| 29 | $Na_2B_4O_7$ | 1.1 | 0.1 parts |

*Girdler 101 catalyst K-promoted beads.

Example 30 (Hydrothermal)

The alumina-HZSM-5 extruded composition of Examples 1-7 is ammonium exchanged and calcined. An aliquot of the alumina-bound catalyst is treated at 228°C with flowing undiluted unpressurized stream for 20 hours and exchanged with 1N $NH_4NO_3$. The comparative results of several examples are given below.

| Example No. | Temp°C | Pressure | Treatment | Time | Cat. activity |
|---|---|---|---|---|---|
| 2 | 100 | 1 atmo. | Hydrothermal | 8 days | 4.5 |
| 7 | 173 | 125 psi | Hydrothermal | 14 hours | 23 |
| 30 | 228 | 1 atmo. | steam | 20 hours | 1.6 |
| control | - | - | none | - | 1.4 |

The comparative data show that steaming at atmospheric pressure is substantially ineffective at 228°C; whereas hydrothermal treatment in aqueous media shows significant increase in the $\alpha$-value at only 100°C and autogenous.

Example 31 (Hydrothermal)

The procedure of Example 1 is repeated except the hydrothermal treatment is conducted at 151°C for 40 hours, giving an acid activity ($\alpha$) = 33.

The above data establishes the utility of the zeolite hydrothermal activation process for numerous different materials and process conditions. The unusually high alpha values obtained using alkaline conditions may be attributed to surface recrystallization of the zeolite during treatment. This is particularly noted in Examples 4, 5, 15, 17, 27, etc.

Example 32 (Hydrothermal)

The standard hydrotreating procedure is followed except the zeolite employed is a crystalline borosilicate prepared by the method of U.S. Patent No. 4,269,813 (Klotz). The zeolite is treated in admixture with gamma-$Al_2O_3$ beads at 205°C for 18 hours. The cracking activity (α) of the zeolite is increased from 7 to 12.

Example 33

A sample of zeolite ZSM-5 in the hydrogen form and having a structural silica:alumina ratio of 1600:1 was mulled by ball milling with 35 percent by weight of alpha-alumina monohydrate, adding sufficient deionized water to form a mixture which could be conveniently mulled. The mull was extruded into pellets (small cylinders of 1.6 mm diameter) and the pellets air dried at 110°C, precalcined in nitrogen at about 540°C after which the zeolite was converted to the hydrogen form by ammonium cation exchange, air drying at about 110°C and calcination in air at about 540°C. The alpha value of this catalyst was 7.7.

A sample of the catalyst was contacted with 100 percent steam at atmospheric pressure and at a temperature of 425°C for 18 hours. The steam treated product had a Constraint Index of 1.6 at 450°C, consistent with the ZSM-5 structure, and an alpha value of 17.6. After the measurement of the alpha value had been made, the catalyst was regenerated by being heated in air to 540°C. The alpha value of the regenerated catalyst was 17.4, indicating that the activation was stable.

Example 34

A sample of the 1600:1 zeolite ZSM-5 of Example 33 was obtained in the hydrogen form by ammonium exchange of the as-synthesized zeolite, followed by air calcination of the ammonium ZSM-5 at about 540°C. The binder-free zeolite was then treated in 100% steam at atmospheric pressure at 425°C for varying periods of time, after which the activity of the catalyst was determined. The results are shown in the Table below.

TABLE

| Steaming time (hours) | Alpha-activity |
|---|---|
| 0 | 6.1 |
| 6 | 7.2 |
| 18 | 7.6 |
| 45 | 7.2 |
| 44 | 7.0 |

These results, in comparison with those of Example 33, show that the presence of the binder is necessary for the activation to occur.

Example 35

Two parts of the 1600:1 zeolite ZSM-5 of Example 33 in the hydrogen form produced by the air calcination of the ammonia form zeolite were mixed well with one part of alpha-alumina monohydrate and the mixture was then pelletized and steamed for 18 hours in 100% steam at atmospheric pressure and 425°C. The alpha value of the steamed catalyst was 6.7, showing that mere admixture of the zeolite and the binder is insufficient for activation.

Example 36

The 1600:1 zeolite ZSM-5 of the immediately preceding Examples in the ammonium form was mulled with 35% alpha alumina monohydrate by ball milling after which the mixture was extruded into 1.6 mm cylindrical pellets. The extruded catalyst was then dried in air at 120°C, precalcined in nitrogen at 540°C, followed by an ammonium exchange, air drying at 120°C, air calcination and steaming for 18 hours at 425°C under atmospheric pressure. The alpha value of the steamed catalyst was 12.3, a substantial increase over the original alpha value of 6.1.

The catalyst was then steamed for an additional hour at 540°C and under atmospheric pressure, after which the alpha value was found to be 12.1, consistent with a theoretical prediction of 12.0.

In the next three Examples, the relative activity of the zeolites was measured by their hexadecane cracking activity since the conventional alpha test is insufficiently discriminating at the activity levels investigated. In the hexadecane cracking test, n-hexadecane is passed over the test candidate at elevated temperature and pressure in a down-flow trickle bed reactor. The conversion is adjusted to be in the range of 20-60 percent whenever possible in order to maximize accuracy. Hydrogen is fed in with the feed at a 1.3:1 molar ratio hydrogen:hexadecane. An internal standard, 1,4-dimethyl-

naphthalene which is inert to cracking under the test conditions was also employed (90% n-hexadecane, 10% 1,4-dimethylnaphthalene). The conditions used were as follows:

| | |
|---|---|
| Temperature, $^\circ$C | 350 |
| Pressure, kPa | 2170 |
| Feed rate, ml. hr$^{-1}$ | 6 |
| $H_2$:n-$C_{16}H_{34}$ ratio molar | 1.3:1 |

The results are reported as the percentage conversion of the feed. All percentages are by weight.

Example 37

A 2 g. sample of NazSM-5/$Al_2O_3$ extrudate (zeolite silica:alumina ratio of 70:1) was found to be essentially inactive, having an alpha value for the zeolite of 0.15. In the hexadecane cracking test, the conversion was less than 1 percent.

After steaming the extrudate at 400$^\circ$C overnight, the conversion in the hexadecane cracking test was 19.7 percent. After steaming at 500$^\circ$C, the conversion was 45.4 percent.

Example 38

An inactive, binder-free sample of another NazSM-5 silica:alumina ratio of 70:1) was found to have a hexadecane conversion of less than 1 percent. After steaming this zeolite on its own at 500$^\circ$C overnight, the conversion remained below 1 percent.

The zeolite (1.3 g) was mixed with gamma alumina (0.7 g) and steamed at 500$^\circ$C overnight. The activity in the hexadecane cracking test was found to be 54.8 percent.

Example 39

A high pour point crude oil (pour point over 15$^\circ$C) is passed over a steamed NazSM-5/$Al_2O_3$ extrudate (65% zeolite, 35% alumina) at 350$^\circ$C, 1 WHSV in 2170 kPa hydrogen. The dewaxed oil obtained in better than 90% yield is found to have a pour point below -32$^\circ$C.

Example 40

Preparation of ZSM-5 containing about 50 ppm alumina (about 38,000:1 silica-to-alumina ratio)

ZSM-5 crystals were synthesized from a formulation containing tetraethylorthosilicate, sodium hydroxide, tetrapropylammonium bromide, and water at 212°F with intensive agitation. Special precautions were taken to prevent alumina contamination from the crystallization equipment and the environment.

50 g of the material were calcined in an ammonia atmosphere at 1000°F for three hours to decompose the organic components in the zeolite. The product was pure white without any signs of a carbon residue. The NH$_3$ calcined material was subsequently purged with nitrogen and then air for one hour to remove any absorbed NH$_3$. The sodium content of the sample was reduced to 0.01 wt. % by treatment with a 0.1 ammonium nitrate solution followed by hot water washing. The sample was then dried and its chemical composition is set forth below.

Chemical composition

| | |
|---|---|
| Al$_2$O$_3$, ppm | 50 |
| SiO$_2$, wt. % | 99 |
| Na, wt. % | 0.01 |
| N, wt. % | 0.05 |
| C, wt. % | 0.03 |
| Ash, wt. % | 99.6 |

Example 41

A portion of a zeolite produced in accordance with Example 40 was calcined in a muffle furnace at 1000°F for three hours, sized to 30-60 mesh, and 2.5 g (4.8 cc) were charged to a 5/16" ID stainless steel microreactor. The ZSM-5 was treated in situ with hydrogen at 900°F for one hour. Propylene, admixed with 50 volume percent of hydrogen, was then passed over the catalyst at 500 psig (total pressure - 1000 psig), 0.4 WHSV, 400°F for two hours. No C$_6$+ liquid product was obtained.

Example 42

Conversion of propylene over a physical mixture of 50 ppm Al$_2$O$_3$, ZSM-5 and alumina

A mixture of 1.63 g (2.9 cc) 50 ppm Al$_2$O$_3$ both sized to 30-60 mesh and calcined at 1000°F for three hours, was charged to the reactor and treated again in situ with hydrogen at 1000°F for one hour. Propylene was then

passed over the catalyst under the same conditions as
in Example 41 for successive periods of 16 1/2 and 22 1/2
hours.  Again, no $C_6^+$ liquid was formed.

Example 43

Preparation of 50 ppm $Al_2O_3$ ZSM-5 with 35 wt. %
alumina binder

The 50 ppm $Al_2O_3$ ZSM-5, as synthesized, was
mulled with 35 wt. % alpha alumina monohydrate with
added deionized water, extruded (1/16") at 25 tons pressure, dried at 230°F, precalcined in ammonia for three
hours at 1000°F, ammonium exchanged to reduce sodium
to < 0.02 wt. %, dried at 230°F, and calcined in air
for three hours at 1000°F.

Example 44

Propylene over 50 ppm $Al_2O_3$ with 35 wt. % alumina
binder

2.50 g of the catalyst from Example 43, sized
to 30-60 mesh, was charged to the reactor, treated with
hydrogen in situ for one hour at 900°F, and then propylene
passed over the catalyst under the conditions of Examples
41 and 42.  Results are shown in the tables below:

|  | | Yields | |
|---|---|---|---|
| Material Balance Time, | | | |
| Hrs. | | 19 1/2 | 22 |
| Time on Stream, Days | | 0.8 | 0.9 |
| Yields, wt. % | | | |
| $C_1 + C_2$ | | 0.1 | 0.1 |
| $C_3=$ | | 22.7 | 22.7 |
| $C_3$ | | 2.4 | 3.0 |
| $C_4$'s | | 1.2 | 1.4 |
| $C_5$'s | | 1.8 | 1.4 |
| $C_6^+$ | | 71.9 | 71.4 |
| | | 100.0 | 100.0 |

The $C_6^+$ liquid from the two runs was composited
and distilled to give 28.6 wt. % 330°F⁻ gasoline and
42.9 wt. % 330°F+ fuel oil.  The gasoline had an octane
number (R+O) of 94 and the fuel oil a pour point of
-70°F, diesel index 67.

330°F⁻ gasoline

| | |
|---|---|
| Yield, wt. % | 28.6 |
| Gravity, °API | 64.7 |
| "    , specific | 0.7213 |
| O.N., R+O | 94 |

Boiling range, °F

| | |
|---|---|
| 5% | 132 |
| 50% | 267 |
| 95% | 328 |

330°F+ Distillate (fuel oil)

| | |
|---|---|
| Yield, wt. % | 42.9 |
| Gravity, °API | 42.7 |
| " | 0.8123 |
| Pour point, °F | -75 |
| Aniline No. | 157.2 |
| Diesel Index | 67 |
| Hydrogen, wt. % | 13.93 |
| Carbon | 86.15 |
| H/C ratio | 1.92 |

Boiling range, °F

| | |
|---|---|
| 5% | 339 |
| 50% | 458 |
| 95% | 651 |

Example 45

Waxy Lube Raffinate Charge

A furfural extracted, waxy heavy neutral lube stock, designated Coryton 0048 raffinate, was processed over the catalysts of Examples 40 and 43 at 1 LHSV, 400 psig, 2500 SCF hydrogen/bbl. Results are compared below with a conventional ZSM-5 catalyst. (1% Ni on 70/1 $SiO_2/Al_2O_3$ ZSM-5 with 35% alumina binder, steamed to 70∝).

Lube Dewaxing

| | | Mixture*<br>Example 40<br>+ $Al_2O_3$ | Example 43 | Conventional<br>catalyst |
|---|---|---|---|---|
| Catalyst | | 650 | 651 | 551 |
| Material Balance Time, Hrs | | 18 1/2 | 18 | 18 |
| Yields, wt. % | | | | |
| $C_1+C_2$ | | | 0.1 | 0.1 |
| $C_3$ | | | 0.9 | 2.2 |
| $C_4$ | | | 2.5 | 3.8 |
| $C_5$ | | | 1.8 | 2.1 |
| $C_6$-650 | | | 9.4 | 8.8 |
| $650^{\circ}F^+$ Lube | | | 85.1 | 82.8 |
| | | | | |
| $650^{\circ}F$ Lube Properties | | | | |
| Gravity, $^{\circ}API$ | 29.1 | | 28.4 | 28.5 |
| Specific | 0.8811 | | 0.8849 | 0.8844 |
| Pour point, $^{\circ}F$ | 115 | 115 | +20 | +10 |
| $KV@40^{\circ}C$, cs | -- | -- | 95.08 | 109.0 |
| $KV@100^{\circ}C$, cs | 9.91 | -- | 10.77 | 11.42 |
| V.I. | -- | -- | 96.3 | 90.0 |

*Physical mixture of 1.7 g (3.0 cc) Example 40 plus 0.9 g (1.8 cc) alumina.

The 50 ppm $Al_2O_3$ catalyst has essentially no lube catalytic dewaxing activity. Addition of the alumina binder (Example 43) imparts activity with no adverse effect on the ZSM-5 shape selectivity as indicated by the pour point-viscosity index relationship. In this example it is less active but more selective than the standard conventional catalyst, i.e. gives a higher viscosity index at about the same pour point.

Example 46

The procedure of Example 43 was repeated with the sole exception that no water was used in mulling the alumina with a high silica ZSM-5.

Example 47

In this example alumina alone was mulled with added water (no high silica zeolite) and then the high silica zeolite of Example 41 was wetted with the extract liquid and thereafter processed in identical manner to Example 41, i.e. ammonium precalcination for three hours at 1000°, base exchanged with an ammonium solution to reduce the sodium content to 0.02 wt. % followed by air calcination.

Example 48

This example consisted of the use of 100% Kaiser alumina binder alone in order to completely eliminate the possibility that alumina itself was responsible for any catalytic activity.

The catalysts of Examples 46-48 were evaluated for the conversion of propylene under conditions recited in Examples 41 and 42 and the results are shown in the following table together with results from some of the previously referred to examples.

## TABLE

### Conversion of propylene

|  | Pure crystals | Physical mixture with binder | Dry-mulled with binder | Wetted with $H_2O$ extract with binder | Wet-mulled with binder | | Alumina alone |
|---|---|---|---|---|---|---|---|
| Example | 41 | 42 | 46 | 47 | 43 | | 48 |
| WHSV, on total | 0.4 | 0.6 | 0.6 | 0.6 | 0.5 | 0.6 | 0.5 |
| Material Balance |  |  |  |  |  |  |  |
| Time, Hrs. | 2 | 15 | 18 | 18 | 19.5 | 18.5 | 2 |
| $C_3$= conversion, wt. % | 16 | 15 | 16 | 5 | 77 | 77 | 55 |
| Yields, wt. % |  |  |  |  |  |  |  |
| $C_1 + C_2$ | 0.1 | 0.5 | 0.1 | -- | -- | 0.3 | -- |
| $C_3$= | 84.0 | 85.5 | 83.6 | 95.2 | 22.7 | 22.6 | 45.4 |
| $C_3$ | 7.9 | 13.3 | 3.3 | 0.9 | 2.4 | 1.8 | 53.8 |
| $C_4 + C_5$ | 8.0 | 0.7 | 8.2 | 2.7 | 3.0 | 3.0 | .8 |
| $C_6$+ | 0.1 | 0.1 | 4.8 | 1.1 | 71.9 | 72.3 | -- |
|  | 100.0 | 100.0 | 100.0 | 100.0 | 100.0 | 100.0 | 100.0 |
| $330^oF$+ Distillate |  |  |  |  |  |  |  |
| % of liq. prod. | -- | -- | -- | -- | 56 | -- | -- |

From the above table, the pure crystals, i.e. Example 41 made no liquid product. The physical mixture, i.e. Example 42, eliminated the possibility that the high silica ZSM-5 and the alumina particles as such are interacting and the dry mulling experiment, i.e. Example 46, eliminates ammonium exchange in the final calcination as being involved in the generation of active sites. The water extract experiment, i.e. Example 47, eliminates room temperature wet mulling as a possible source of dissolved alumina entering the ZSM-5 pores. The alumina only experiment, i.e. Example 48, also made no liquid product and as such this result confirms the fact that the binder as such in the wet mulled catalyst is not making liquid product at 400°F.

Examples 49-51

Another series of examples were carried out in order to illustrate the criticality of the use of water during the mulling of the high silica zeolite with the alumina. In all of these examples, 65 wt. % of the ultra low alumina zeolite of Example 1 was used and the binder was 35 wt. % alpha alumina monohydrate. Each sample was treated after forming in accordance with the procedure of Example 43. Examples 49 and 51 did not use water. Example 50 did use water but no hydraulic pressure.

The compositions were evaluated together for alpha activity.

The results are shown in the following table along with a comparison with the catalyst of Example 43.

TABLE

| Example | 49 | 50 | 51 | 43 |
|---|---|---|---|---|
| Method of incorporation | Dry mulling[1] and hand · pressing | Wet mulling[1] and hand pressing | Dry mixing[2] and hand pressing | Wet mulling[1] hydraulic extrusion (at 25 ton pressure (3) |
| activity | 0.25 | 1.0 | 0.13 | 5.7 |

(1) Mulling -- Mix in a muller (Cincinnati Muller Co.) for 10-15 minutes with or without water

(2) Mixing -- Mechanical mixing with no kneading action

(3) Extrusion -- Extrusion using a hydraulic RAM extruder

- 25 -

0134333

As can be seen, the preparation without water, i.e. Examples 49 and 51, resulted in very low alpha values -- even though the ammonia precalcination, ammonium exchange and air calcination were carried out. However, the preparations with water gave enhanced results.

Examples 52-53

These examples illustrate the effect of time and temperature of ammonia precalcination on alpha activity and a comparison is made with the catalyst of Example 43. In each example, the procedure of Example 43 was followed.

The results and operation conditions are shown in the following table.

TABLE

| Example | 52 | 43 | 53 |
|---|---|---|---|
| Precalcination | | | |
| Temperature, $^{\circ}$F | 800 | 1000 | 1200 |
| Time, Hr. | 8 | 3 | 3 |
| Atmosphere | $NH_3$ | $NH_3$ | $NH_3$ |
| Alpha activity | 0.5 | 5.7 | 3.0 |

Examples 54-55

These examples show the effect of binder concentration on activation.

In each example the exact procedure of Example 43 was followed with the exception of varying the binder content. Note that the binder has a surprising effect on activity.

The results and specific formulations are shown below together with the catalyst of Example 43.

TABLE

| Example | 54 | 43 | 55 |
|---|---|---|---|
| Zeolite/binder | | | |
| (wt. bases) | 90/10 | 65/35 | 10/90 |
| Alpha activity | 0.40 | 5.7 | 3.0 |
| Alpha activity, normalized* | 0.24 | 5.7 | 19.5 |

*Normalized to unit weight of zeolite based on 65/35 wt. ratio.

Examples 56-58

These examples illustrate that the mesh size of the catalyst is not critical.

In each example the catalyst prepared by the process of Example 43 was ground to different mesh size and the alpha activity measured.

The results are shown in the following table.

TABLE

| Example | 56 | 57 | 58 |
|---|---|---|---|
| Mesh size of catalyst | 12-14 | 14-25 | 25-40 |
| Alpha activity | 5.8 | 5.7 | 5.2 |

Example 59

A high silica ZSM-5 composite catalyst is made by mixing 65 parts by weight of ZSM-5 zeolite ($SiO_2:Al_2O_3$ = 2327:1) with 35 parts by weight (dry calcined basis) of alpha aluminum monohydrate (Kaiser) and mulled with sufficient water to form an extrudable mass. After 1/16" extrudate composite, the catalyst is dried and precalcined at 1000°F (540°C) in nitrogen atmosphere for three hours. The calcined composite is ion exchanged with 1 N ammonium nitrate, dried and calcined again to obtain the hydrogen form. The exchanged catalyst contains 0.09% Na and has an alpha value of 2.

The hydrothermal treatment is conducted at 148°C (300°F) for 24 hours in an autoclave, using about 5 volumes of water per volume of composite catalyst. The recovered catalyst is dried at 110°C (230°F) and calcined at 540°C (1000°F) for three hours. The treated catalyst has an alpha activity of 38.

CLAIMS

1.  A method of preparing a catalyst of enhanced activity, alpha, which comprises forming, in the presence of water, an intimate composite of a zeolite having a constraint index of 1 to 12 and a lattice silicon/non-silicon atomic ratio of at least 20 with a binder comprising an oxide of aluminum, gallium, boron, iron and/or chromium, the binder constituting from 10 to 90 weight percent of the composite on a dry basis, and contacting the composite in the form of extrudate or shaped particles of catalyst with water at a temperature of 100 to 500°C for a period of time sufficient to enhance catalytic activity of the composite.

2.  A method according to Claim 1, wherein the water is liquid and contacts the composite for at least one hour.

3.  A method according to Claim 1 or Claim 2, wherein the contacting is effected at a temperature of 100 to 370°C.

4.  A method according to Claim 2 or Claim 3, wherein the contacting is effected at a pressure of 1 to 218 atm.

5.  A method according to Claim 1, wherein the water is in the form of steam and contacts the composite for at least one hour.

6.  A method according to Claim 5, wherein the contacting is effected at a temperature of 200 to 500°C.

7.  A method according to Claim 6, wherein the temperature is 300 to 450°C.

8.  A method according to Claim 7, wherein the temperature is 400 to 425°C.

9.  A method according to any one of Claims 5 to 8, wherein the steam is diluted by an inert gas.

10.  A method according to any of Claims 5 to 9, wherein the contacting is carried out at a pressure of 100 to 500 kPa.

11.  A method according to Claim 10, wherein the pressure is 100 to 200 kPa.

12. A method according to any preceding claim, wherein the duration of said contacting is up to 48 hours.

13. A method according to Claim 12, wherein said duration is 12 to 48 hours.

14. A method according to any preceding claim, wherein said intimate composite is formed by wet milling or by mulling.

15. A method according to any preceding claim, wherein the intimate composite is formed into shaped particles of catalyst by extrusion.

16. A method according to any preceding claim, wherein the intimate composite is formed in the presence of sufficient water to provide a mixture of consistency suitable for the formation of shaped catalyst particles.

17. A method according to any preceding claim, wherein the binder constitutes 25 to 50 weight percent of the composite on a dry basis.

18. A method according to any preceding claim, wherein the zeolite is ZSM-5, ZSM-11, ZSM-12, ZSM-23, ZSM-35 or ZSM-38.

19. A method according to any preceding claim, wherein the zeolite is an aluminosilicate.

20. A method according to Claim 19, wherein the zeolite has a silica/alumina ratio greater than 500.

21. A method according to Claim 19, wherein the zeolite has a silica/alumina ratio greater than 1600.

22. A method according to any preceding claim, wherein the zeolite has a silica/alumina ratio greater than 26,000.

23. A method according to any preceding claim, wherein the zeolite is one synthesized from a reaction mixture containing aluminum only as an impurity.

24. A method according to any preceding claim, wherein the zeolite of which the intimate composite is formed is in the alkali metal form.

25.   A method according to any preceding claim, wherein the zeolite in the composite contacted with water is at least partly in the hydrogen form.

26.   A method according to any preceding claim, which comprises mulling the zeolite with the binder and water, shaping the mulled mixture into catalyst particles, calcining said particles in a non-oxidizing atmosphere, base-exchanging the calcined particles to remove sodium and calcining the exchanged particles in air.

27.   A method according to Claim 26, wherein said shaping comprises extrusion at a pressure of at least 5 tons.

28.   A process according to any preceding claim, wherein the zeolite in the composite contacted with water has a crystal size of at least 0.1 micron.

29.   Use as catalyst in the conversion of organic compounds of the product of the method claimed in any of Claims 1 to 28.

AMENDED 0134333
CLAIMS

CLAIMS

1. A method of preparing a catalyst of enhanced activity, alpha, which comprises forming, in the presence of water, an intimate composite of a zeolite having a constraint index of 1 to 12 and a lattice silicon/non-silicon atomic ratio of at least 250 with a binder comprising an oxide of aluminum, gallium, boron, iron and/or chromium, the binder constituting from 10 to 90 weight percent of the composite on a dry basis, and contacting the composite in the form of extrudate or shaped particles of catalyst with water at a temperature of 100 to 500°C for a period of time sufficient to enhance catalytic activity of the composite.

2. A method according to Claim 1, wherein the water is liquid and contacts the composite for at least one hour.

3. A method according to Claim 1 or Claim 2, wherein the contacting is effected at a temperature of 100 to 370°C.

4. A method according to Claim 2 or Claim 3, wherein the contacting is effected at a pressure of 1 to 218 atm.

5. A method according to Claim 1, wherein the water is in the form of steam and contacts the composite for at least one hour.

6. A method according to Claim 5, wherein the contacting is effected at a temperature of 200 to 500°C.

7. A method according to Claim 6, wherein the temperature is 300 to 450°C.

8. A method according to Claim 7, wherein the temperature is 400 to 425°C.

9. A method according to any one of Claims 5 to 8, wherein the steam is diluted by an inert gas.

10. A method according to any of Claims 5 to 9, wherein the contacting is carried out at a pressure of 100 to 500 kPa.

11. A method according to Claim 10, wherein the pressure is 100 to 200 kPa.

12.   A method according to any preceding claim, wherein the duration of said contacting is up to 48 hours.

13.   A method according to Claim 12, wherein said duration is 12 to 48 hours.

14.   A method according to any preceding claim, wherein said intimate composite is formed by wet milling or by mulling.

15.   A method according to any preceding claim, wherein the intimate composite is formed into shaped particles of catalyst by extrusion.

16.   A method according to any preceding claim, wherein the intimate composite is formed in the presence of sufficient water to provide a mixture of consistency suitable for the formation of shaped catalyst particles.

17.   A method according to any preceding claim, wherein the binder constitutes 25 to 50 weight percent of the composite on a dry basis.

18.   A method according to any preceding claim, wherein the zeolite is ZSM-5, ZSM-11, ZSM-12, ZSM-23, ZSM-35 or ZSM-38.

19.   A method according to any preceding claim, wherein the zeolite is an aluminosilicate.

20.   A method according to Claim *any preceding*, wherein the zeolite has a silica/alumina ratio greater than 1600.

21.   A method according to any preceding claim, wherein the zeolite has a silica/alumina ratio greater than 26,000.

22.   A method according to any preceding claim, wherein the zeolite is one synthesized from a reaction mixture containing aluminum only as an impurity.

23.   A method according to any preceding claim, wherein the zeolite of which the intimate composite is formed is in the alkali metal form.

24. A method according to any preceding claim, wherein the zeolite in the composite contacted with water is at least partly in the hydrogen form.

25. A method according to any preceding claim, which comprises mulling the zeolite with the binder and water, shaping the mulled mixture into catalyst particles, calcining said particles in a non-oxidizing atmosphere, base-exchanging the calcined particles to remove sodium and calcining the exchanged particles in air.

26. A method according to Claim 25, wherein said shaping comprises extrusion at a pressure of at least 5 tons.

27. A process according to any preceding claim, wherein the zeolite in the composite contacted with water has a crystal size of at least 0.1 micron.

28. Use as catalyst in the conversion of organic compounds of the product of the method claimed in any of Claims 1 to 27.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | EP-A-0 034 444 (MOBIL OIL)<br><br>* Claims 1-7, 13-18; page 6, lines 22-24; page 11, line 1 - page 12, line 13; page 14, line 22 - page 16, line 26; examples 1-3 * | 1-19, 24-29 | B 01 J 29/06 |
| Y | --- | 20-23 | |
| Y | US-A-4 361 713 (KAEDING)<br>* Column 3, line 15 - column 9, line 60 *<br>--- | 20-23 | |
| D,Y | US-A-4 073 865 (FLANIGEN)<br>* Claim 1; column 3, lines 9-27 * | 22-23 | |
| | ----- | | **TECHNICAL FIELDS SEARCHED (Int. Cl. ³)**<br><br>B 01 J |

The present search report has been drawn up for all claims

| Place of search | Date of completion of the search | Examiner |
|---|---|---|
| THE HAGUE | 07-05-1984 | MICHIELS P. |